# EUROPEAN PATENT APPLICATION

(11) **EP 3 101 600 A1**
(43) Date of publication of application: **07.12.2016**
(21) Application number: 14879757.4
(22) Date of filing: 30.12.2014
(51) Int. Cl.: G06Q 10/00, G08G 1/123, G01C 21/34

(54) **METHOD FOR MONITORING AND CONTROLLING VEHICLE ROUTES IN ORDER TO OPTIMISE THE USE OF THE LOAD CAPACITY THEREOF**

(30) Priority: 27.01.2014 ES 201430091
(71) Applicant: Herráiz Herráiz, Martín, 16532 Gascueña, Cuencia (ES)
(72) Inventor: Herráiz Herráiz, Martín, 16532 Gascueña, Cuencia (ES)
(86) International application number: PCT/ES2014/070992
(87) International publication number: WO 2015/110677

(57) **Abstract**

The invention relates to a method for optimising the use of the unoccupied load transport capacity of vehicles, assigning the most suitable transport requests to each vehicle in real time. A device in the vehicle communicates its route modifications to a control unit, and the unit alters the points which make up the route thereof, in real time, so that it can collect and deliver loads at these points. It also takes into account the use made of the vehicle for each transported load.

## Description

### Technical field

This invention intends to improve the efficiency of transportation, achieving a higher occupancy of the load capacity of vehicles, through a procedure in which a control entity monitors and controls their courses, so it could fit in the G08G1 section of the European classification.

### Background art

In the 21st century, we could make a more efficient use of our vehicles, harnessing the full potential of a series of technological advances that are already at our disposal, such as global positioning satellite systems, road navigation and guidance aids, smart phones that almost equal the processing power of personal computers and cell phone data networks with a virtually global coverage.

As of today, it is still missing to develop a way to take advantage of all this technology to coordinate citizens and businesses on a more rational means of transportation, though the establishment of a procedure that optimizes the use of the capacities of the commonly used vehicles, by its sharing.

As transportation alternatives, apart of getting around by your own means, there are rental vehicles, and the public transportation means that follow certain preset routes. Regarding the sharing of private vehicles, from long ago they have been occasionally shared when several people get into agreement to travel together, or to transport certain cargo in the vehicle of one of them. For that, normally this people met each other previously, and communicate their intentions before starting. Another method a passenger could use was to auto-stop on the road, hoping to be picked up by some vehicle going on the same direction.

In recent years, some systems have been developed for centrally monitoring the position of vehicles pertaining to the fleets of certain transport companies, and others seeking to join in shared vehicles several people who have to move in the future between the same origin and destination points.

For more than 30 years, some related patens have been granted, like US 4360875, or the more recent US 2011231354. Nevertheless, to date in hasn't been implemented a procedure that really improves the efficiency of transport through the popularization of the sharing of the vacant load capacities on vehicles.

### Invention disclosure

The problem to solve is that usually vehicles go around under using their load transport capacities. For instance, many private cars carry a single person for the most part of their courses, even though they have empty seats in which they could carry a certain number of passengers, apart from the driver. This involves an excessive number of vehicles circulating and causes problems on traffic, energy consumption, pollution, etc.

This invention tries to solve the problem occupying the different load capacities that vehicles are having vacant along their courses; and solves the problem through an approach that monitors and controls the courses of the vehicles in real time, managing the assignment of transport requests to the course of the vehicle, even though they don't necessary need to have the same points of origin and destination; and breaking down such a complex problem on several technical issues, whose resolution is integrated in a same procedure.

Managing the occupancy of the vehicle on the fly, and moreover with only partially coincident paths, raises its own technical difficulties. Broadly speaking, the challenges posed by this approach, and the way the invention solves them are:
1. Predict and control the future position of the vehicle.
   The procedure doesn't content itself with taking into consideration the origin and destination points of the paths, but an entity monitors along the whole course the position of the vehicle as well as the loads that it transports, and even predicts the future position of the vehicle some time in advance. The entity also governs the vehicle course, altering its planned route when it is convenient.
2. Optimize the use of processing resources and efficiency of communications with the vehicle.
   The procedure provides a better distribution of functions between a device on board the vehicle and the entity that controls its course, by adding new features, and using a more efficient communication protocol between them than those used in the current state of the art. In this sense, the device does not communicate raw and regular information about its position or not simply reports its instantaneous direction and speed, but this information is locally elaborated by the device itself to filter multiple irregularities suffered in the displacement of vehicles along the road, detect trajectory changes and communicate to the control entity only those changes of trajectory that are truly relevant.
3. Regulate the operation.
   The invention defines a number of specific parameters and sets the way of modulating the values of these parameters so that the execution of the procedure can adapt in the most convenient way to the circumstances of different courses, being they due to the geographical characteristics of the route, to the changing traffic conditions, or the needs of the users; maintaining the effectiveness of the results in all cases.
4. Monitor the length of the paths of the requests transported by the vehicle and the way that each of them has shared the vehicle with the others.
   The procedure automatically records the load of the requests that share the same vehicle in every moment of the course, as well as their path lengths, calculating the benefit that each of them obtains from the shared vehicle, laying the groundwork that permits an automatic and equitable distribution of the transportation costs.

The invention solves this set of technical challenges thanks to the monitoring and control of some basic physical quantities, such as weights, volumes, times or geographical positions, to the elaboration of other magnitudes derived from them, as distances between locations, displacement directions and speeds, or trajectories followed by vehicles; the establishment of the way to set the values for a set of control parameters defined by the invention, and finally through the integration of all those solutions in the various steps of a procedure industrially applicable.

The advantages and benefits of the invention are described below:
Each of the aspects of the procedure, which meet a specific technical problem, contributes with its own advantages, while from the invention as a whole emerge some general benefits, which may surprise by its magnitude.

The advantages provided by the different aspects of the detail of the procedure are:
The main procedure, which organizes the shared use of a vehicle while it is on course to its preset destination, allows it to pick up and deliver loads anywhere in the vicinity of its route, which greatly increases the chances of finding suitable requests to be transported by the vehicle.

Monitoring the position of the vehicle in real time during its course, looking for requests that are ready to go immediately, avoids the need to coordinate courses temporarily (as opposed to a procedure which would reserve the load capacities and plan the full course before its start).

Predicting during the whole course what will be the position of the vehicle in the near future, and altering its route on the fly, allows to organize the transport of the requests just in time to send the vehicle to pick up a load incurring in the minimum increase on the route length, without forcing it to deviate too much, nor to going back over the path already done.

The automatic repetition of the procedure allows to transport as much requests as possible in each vehicle, and to keep occupied most of its load capacity along its entire course.

The device of the vehicle provides the control entity elaborated and reliable information about its displacement, filtering the noise and distortion posed by continuous fluctuations of the speed and direction of displacement usually suffered by vehicles.

Enabling on the device of the vehicle a circular register with the appropriate length according to the established averaging time, and storing on it at regular intervals the successive positions of the vehicle indicated by its location system, eliminates the need of dating each of the stored positions nor to elaborate timing information to calculate the average displacement of the vehicle. This method uses less processing resources in the device, since it is enough to manage a pointer marking the element of the register that holds the oldest position.

The vehicle's device locally monitors its own trajectory changes, without communicating vehicle's position periodically to the control entity, but only the occurrence of those trajectory changes with enough relevance. This way the entity will be freed of many interruptions, and of the task of monitoring the trajectory changes of a multitude of vehicles; and the time interval between displacement update messages from each of the vehicles can be increased (which otherwise, would have to be issued periodic and much more often, to feedback continuously the control entity with the ever changing position of the vehicles). Thus, while not informed of a trajectory change, the entity can trust that it is correct to estimate the position of the vehicle on the basis of the latest trajectory information received from it.

This also reduces the amount of messages and the frequency of its emission by the device of the vehicle, achieving more efficient communications, at a lower economic costs, while maintaining the accuracy of the location; what means: optimizing the use of processing and communication means, both by the entity and the device of the vehicle. This savings in communication and processing resources achieves an increase on the number of vehicles and requests that can be controlled simultaneously by a single control entity, and a decrease on the power consumption by the device on the vehicle, increasing the duration of its reserve of energy, which is usually stored in a battery.

The remote setting by the control entity of the values of a series of parameters, whose definition is part of the invention, allows to govern in the device of the vehicle the way how: information about its displacement and the filtering of its irregularities is elaborated, the detection of significant changes of its trajectory is done and, therefore, the interval between messages sent from the vehicle to the control entity. This allows optimizing the pace of communications from vehicle to entity, while keeping the desired accuracy in its prediction of the position of the vehicle. The flexibility provided by this real time adjustment procedure, allows the entity to adapt every vehicle's device to changing course's circumstances, such as: the type of road that it runs (it's very different to predict the position of a vehicle going through the city streets in an urban course, where it could suffer frequent alterations of direction on crossroads and roundabouts, from going by a straight road in unobstructed terrain); to the density or other characteristics of the traffic flow (the vehicle could suffer numerous stops at traffic lights o due to road congestion), etc.

Establishing a tolerance of delivery of the request, and a limit to the increase in the length of the vehicle's route, to the time spent on the course and/or an arrival deadline; together with the use of this information by the entity to elaborate other parameters which govern the assignment of requests to the course of a vehicle, and the monitoring by the entity that these limits are not exceeded while transporting requests, brings the maximum efficiency in the occupancy of the vacant vehicle load capacity and that its sharing occurs in the conditions determined.

Collecting the information about the displacement of the vehicles provided by their devices, allows the entity to build models of traffic, without needing to install thousands of expensive dedicated sensors in the city. This way the entity can: fine-tune its forecasts about the future displacement of vehicles, detect specific incidents with regard to the usual traffic, take the right decisions for the assignment of loads to each vehicle and divert vehicles on time to avoid conflicting circulation points. This way an even greater efficiency in the transport can be achieved.

Automatically dividing the vehicle course in successive legs, in which it is shared by the same requests, and accounting for the lengths of each of them, weighted by the load being carried on the vehicle, is used to record the vehicle sharing, and allows to calculate the benefit that each of the transported requests obtains from it.

The general advantages are:
Facilitating the sharing of vehicles, the invention increases the efficiency of transport and reduces the number of vehicles in circulation. This achieves: saving of expenses (distributing among several requests the cost of the transport in a single vehicle); an overall decrease of the energy consumed in transportation; a reduction of the pollution on the air of the cities caused by the residues from the combustion or hydrocarbons; a decrease of the traffic congestions at rush hour and parking problems; also happens a saving in the time spent on displacements (for example for drivers who will spend less time stuck in traffic jams and driving around looking for a parking place; or for passengers who, having a convenient door to door transport means, will not be forced to make several transfers in public transportation).

The following is a detailed description of the invention:
A control entity has the necessary informatics means to run the procedure described bellow, whose mission is to monitor in real time and to control on the fly the routes of vehicles, each of which circulates with some vacant capacity, which is offered to the entity to improve the efficiency of transport, assigning to each vehicle one or more requests to transport certain loads between their respective points of origin and destination, which (as will be seen later) have to be substantially aligned along the route to be followed by the vehicle towards its own predetermined point of destination.

The entity is in communication with informatics devices located in these vehicles, so they give the entity indications about the progress of their courses, and receive from the entity appropriate instructions and orders.

Each vehicle has its own planned route, which is defined by a list of certain singular geographic points that has to pass in order, guided by its device, which incorporates a car navigator. The device shares the information of this route list with the entity, and admits that the entity modifies it by adding new points, each of which is associated with a task, as can be to pick-up or deliver a request's load. The entity will insert these new points between the ones already existing on the route list in the correct order, according to their proximity to the current position of the vehicle and its distance to its point of destination, so that the vehicle makes the shortest possible distance, and passes for the pick-up point of any of the requests assigned to it before passing for its delivery point, and passes by the rest of the points of the route before arriving at the destination point of the vehicle. When offering its vacant capacity, the vehicle communicates the entity its initial route, which will be composed of at least the point where the vehicle is currently and its own point of destination, and may also include other intermediate points. On the other hand, along the course the device keeps the entity informed about its displacement (in the way indicated below) and already achieved points are eliminated from the list of its planned route.

To assign to each vehicle the transport of the most suitable requests, the entity first checks that the load of the request fits in the vacant capacity of the vehicle, and then that the points of origin and destination of the request are aligned with the direction taken by the vehicle, within certain tolerances.

To do so, the entity begins establishing a zone under reach of the vehicle in the vicinity of its position, whose amplitude is defined by a parameter of deviation of the vehicle from its route for the collection of requests, and looks for the existence of points of origin of requests in that zone that are still waiting to be assigned to a vehicle. For each one it finds, it checks that the capacity required by the request can be accommodated on the transport capacity that the vehicle has vacant at that time, and in such case declares that it has found a request that is a candidate to be carried by the vehicle. Then it studies if the point of destination of the request is located in the direction to be followed by the vehicle according to its planned route at that time, and falls within the range allowed by another parameter of deviation of the route for the delivery of the request. If this condition is met, the entity declares that the request is suitable to be transported in the vehicle, sends to the device a assignment message of such request to the course of the vehicle which, in the simplest version of the procedure, adds to its route the point of origin of the request as the pick-up point of the load of the request, and the destination point of the request as its point of delivery; calculating at the same time the capacity remaining vacant in the vehicle, decreasing it by the amount of the load of the request.

This process of the device updating information of its displacement so it permits to the entity to estimate the vehicle's position, communicating the fulfilment of the assigned objectives, and the searching and assignment of new request to the vehicle's course, is reiterated once and again during the course of the vehicle and continues until it reaches its own point of destination at the end of its route, once the loads of all the assigned requests have been transported.

Each vehicle offering, apart of indicating its vacant load capacity, and an initial route from the place where it is to its point of destination, will express its own value of a parameter of deviation allowed, indicating to the entity how much it admits to deviate from the initial route in order to transport the new loads that the entity could assign to it to fill its vacant capacity.

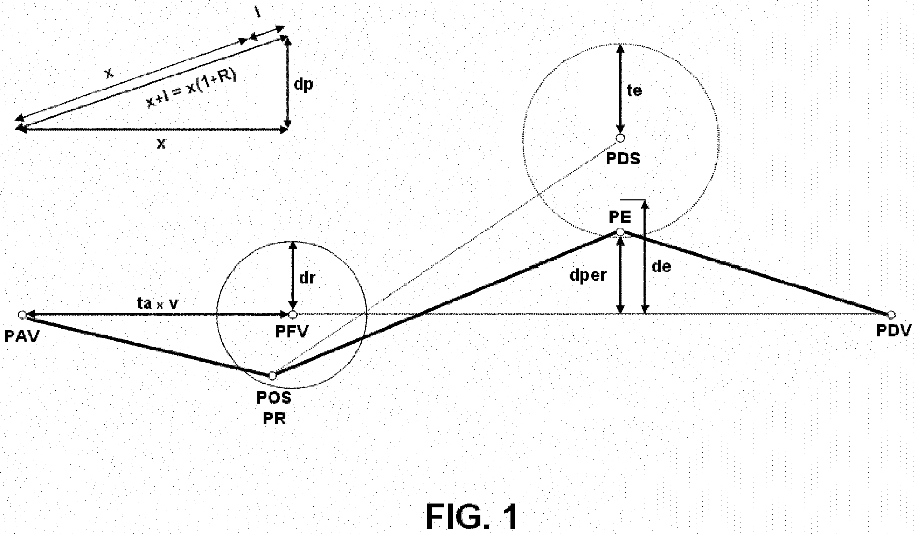

The right triangle of **Figure 1** shows graphically a distance on the path of the vehicle (x), a distance of the deviation allowed (dp), and how the magnitude of this deviation is related to the distance actually made by the vehicle when it deviates. This distance would be (x+I = x(1+R)) because it builds up in an increment (I) with respect to the original distance (x); a ratio R = I/x, can be established between the increase of distance (I) and the distance of the original route (x).

Therefore, the procedure provides for indicating the deviation of the route allowed in several other ways (rather than directly as a distance of deviation of the route), which are more convenient:
- As an allowed increment in the length of the route (I), or as a ratio (R) between the allowed increment in the length of the route and the initial length of the route itself. The most convenient way of indicating this ratio would be expressing it as a percentage of increment of the length of the route: In this case, a value of the parameter of deviation from the route allowed (R) of a 10% would mean that the vehicle admits a deviation to transport new loads implying a maximum increase of the length of its initial route of a 10%.
- Or as well as a limit time of arrival to the destination point of the vehicle. In such case, the workload of the control entity increases, cause it has to take into account said arrival cut-off time, the current time, the distance of the planned route of the vehicle and its speed, to ensure through mathematical calculations that the vehicle will not be late on arrival to its destination because of the time spent in the detours made to transport the new loads of the assigned requests.

Expressed in any of these ways, the parameter of deviation of the route imposes to the entity conditions about the shared use of the vehicle, and a limit that prevents it from declaring that a request is suitable to be carried by the vehicle if it calculates that, as a result of adding to the route its pick-up and delivery points, this limit would be exceeded.

To find requests suitable to be transported in a vehicle, the entity doesn't directly use the deviation of the route generically allowed on the vehicle's offering, but two new parameters of the vehicle instead: a pick-up deviation and a delivery deviation; whose values will be adapted by the entity according to the circumstances along of the course of the vehicle and/or the request concerned, and will be related to the value of the deviation allowed as well as to other factors shown later on. The entity establishes a directly proportional relationship between the deviation allowed and the pick-up and delivery deviations since, all other conditions being equal, the higher the deviation allowed the higher will be their values.

Figure 1 also shows graphically how the entity uses the value of the pick-up deviation (dr) to mark on the ground a zone of reach around a position of the vehicle (PFV), where to search for origin points of requests (POS) still pending to serve.

The position of the vehicle used by the entity to mark the reach zone, at first would be its current position, as indicated by its device in a message that notifies such a position, or (when some time has elapsed from the receipt of one of those messages) would be a current position calculated by the entity on the basis of the elapsed time and the last information received about the displacement and changes of trajectory of the vehicle.

However, to mark the reach zone of the vehicle, rather than its current position (PAV), it is recommended to incorporate the improvement of using instead a future position of the vehicle, such as the one marked as (PFV) in Figure 1, which is located along the planned route of the vehicle that goes from its current position (PAV) to the point of destination of the vehicle (PDV), and that is the position that the entity foresees where the vehicle will be at when elapses a certain time in advance (ta) moving with a speed (v), that is, when the vehicle displaces a distance (ta x v) form its current position (PAV). This improvement of the procedure prevents the vehicle from making abrupt diversions to pick-up request, thus minimizing the distances of the detours, and even prevents the vehicle from going back over the course already made due to possible delays in the assignment of requests, caused for example by an increase of the workload of the entity in the rush hour.

Normally, the point where the vehicle has to deliver the load corresponding to a transport request, is the point of destination indicated by the request; and the entity shall declare that the request is suitable to be carried in the vehicle if the distance from this delivery point to the planned route of the vehicle is less than the delivery deviation established at that time for this request and vehicle.

However, an improvement in the procedure admits that the request contains a non-null value of a parameter of tolerance of delivery, shown as (te) in Figure 1; which means that the request admits the delivery of the load in a different point of delivery (PE), alternative to the point of destination (PDS), which is located in a delivery zone around the point of destination with a radius equal to the value of the tolerance of delivery (te). For example, it would be the case of a passenger who admits leaving the car that carries him at a different point of delivery than its true destination, as long as it is close enough as to walk less than a certain distance to get there.

In such case, the entity will declare that the request is suitable to be carried on the vehicle, if at least one alternative point of delivery (PE) is found, that simultaneously satisfies two conditions: to be within the delivery zone defined by the request, and to be at a distance from the planned route of the vehicle (dper) less than the delivery deviation (de). In this case, the entity shall not include in the route of the vehicle the true passenger's destination as the delivery point, but instead shall include one of the alternative delivery points found, such as the more convenient one for the continuation of the vehicle's course, according to its next target and the layout and drive directions of the streets.

The entity monitors the request's load pick-ups and deliveries made by the vehicle along its course and, comparing them with the vehicle's initial vacant load capacity, on one hand it knows if can declare a request as candidate to be transported by the vehicle, because its requested load is less than the vacant capacity of the vehicle at that time; while on the other hand it keeps up-to-date the value of a parameter which reflects the degree of occupation obtained of the vacant capacity initially offered by the vehicle. The entity uses the value of this parameter to modulate along the course the values of the pick-up and delivery deviations. The entity establishes an inversely proportional relationship between the degree of occupation and the deviations, so that to a lower value of the degree of occupation corresponds higher values of the pick-up and delivery deviations, and thus optimizes the occupation of the load capacities of the vehicles, because it gives more chances to the empty or less loaded vehicles to be occupied, and reduces the distances they run in such unfavourable circumstances.

To achieve greater transport efficiency, defined in terms of the relationship between the transported load and the route distance, the entity adjusts the value of the delivery deviation applied for each request as a function of two other factors: the distance between its origin and destination points; and its required load capacity. The entity establishes a directly proportional relationship between them and the delivery deviation, giving more chances to the large load and/or long distance request to be transported.

The weight and volume of the vacant capacity of the vehicle are accounted separately, as are the weight and volume required by each request, as well as the vacant seats of the vehicle to transport passengers and the seats required by each of the request. In this way the procedure provides that vehicles can simultaneously carry both passengers and goods, and that the limit of the transport capacity of a vehicle is given by a combination of any of those factors.

The continuous changes of speed and direction suffered by vehicles, mainly when they circulate in congested traffic and/or urban environments, pose a real headache for the entity that should monitor their courses, especially when it should also predict their future positions.

In this procedure, the vehicle's device itself filters the irregularities of its displacement and only communicates the entity information about its displacement when it detects that the vehicle has suffered a trajectory change with sufficient relevance.

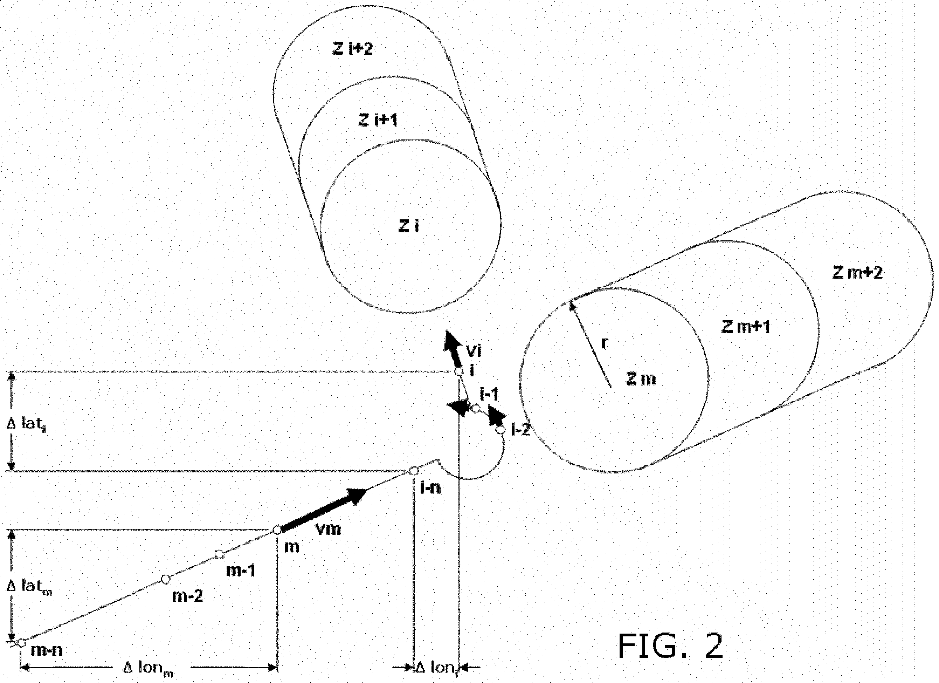

This operation is shown in Figure 2 which serves as a graphic support to describe various technical aspects of the procedure: how the vehicle's device calculates an average of its recent displacement; how it automatically discovers when it happens a relevant change of trajectory, and how the control entity predicts the future zones within reach of the vehicle, in which it shall search for requests.

The figure shows a graphical representation of a typical movement of a vehicle, which starts at the point (m-n) moving at first in a straight line at constant speed, but then slows down an suffers successive changes of direction as it surrounds a roundabout, until getting out of it in a new direction at the point (i). At regular intervals of time, the device receives from a positioning means, like a built in GPS receiver, indication of the successive positions of the vehicle, some of which are indicated in the figure through points along the line that represents its trajectory. But, instead of sending this positions directly to the entity, the device stores them in a local register and compares the last position, which lets assume that at a certain moment is position (m), with the position where it was in an earlier moment, lets assume the position (m-n) when it was n time intervals before. This way the device calculates an average of the recent displacement of the vehicle during the averaging time established, corresponding to the n intervals, which serves to filter out the irregularities of the displacement.

To that end, in the device it's recommended the use of a circular register whose capacity of storage of the number n of positions is a function of the value of the parameter of averaging time and the pace of positions issued by the positioning means. The use of such circular register is more advantageous than the use of an ordinary register, because it leverages the regularity of the intervals at which the positioning means issues its data, in order to not require the dating of such data nor managing time references for the calculation of the average displacement; sufficing just with the handling of a pointer that indicates the position of the record containing the data of the geographical position where the vehicle was n intervals ago, which is also the following data to discard and replace by the following geographical position of the vehicle.

Though comparison of the latitude and longitude components of the displacement average just calculated, with the corresponding components of the last displacement average that it sent to the entity, the device detects those changes in the trajectory of the vehicle which must notify to the entity (being then caused by changes in its direction, speed or both). Suppose that the device sends a message to the entity when the vehicle is in position (m). A snapshot of the speed and direction of the vehicle at that moment are indicated in the figure by the arrow (vm), and its displacement average consists of both components of increment of latitude (**Δ** lat ₘ) and increment of longitude (**Δ** Ion ₘ) of the recent displacement of the vehicle at point (m). According to this information, the entity predicts that, when a certain time of anticipation elapses, the vehicle will be at the position (Zm). Therefore it will search for pending transport requests on a reach zone of the vehicle around this position. The entity, while not receiving a notice of change of trajectory of the vehicle, will understand that the vehicle keeps the same trajectory, and will extrapolate the last information received to predict the future positions of the vehicle at the following moments (Zm+1), (Zm+2), etc...

Then, once the vehicle surrounds the roundabout and is at the point (i), it's device will be calculating its recent displacement average by the difference between the points (i) and (i-n), when, as it can be seen in Figure2, there is an important reduction of the longitude component of the displacement average (**Δ** Ion ᵢ), when compared to the one that it had at the moment m (**Δ** Ion ₘ). If the difference between both components exceeds a determined threshold to notify a change of trajectory, then the device would send another message to the entity communicating new data about the displacement of the vehicle in (i), warning it of the change of trajectory happened, and meanwhile having filtered multitude of communications that would have been unnecessary, and in the worst case counterproductive; without filtering such communications while the vehicle surrounds the roundabout, they would have introduced distortions on the predictions of the future position of the vehicle made by the entity. With the new data received from point (i), the entity would predict the future position of the vehicle and search for pending requests around point (Zi), and later on around (Zi+1), etc. until further notice.

The vehicle's devices are equipped with a set of standard values for the various parameters defined in the procedure, as the averaging time used to calculate the average of the recent displacement of the vehicle, the trajectory change threshold, etc. Devices use these values by default, but the entity might set the value for any of those parameters to any vehicle's device through command messages, to adapt them to the spatial and temporal concrete circumstances of any of the courses of the vehicles under its supervision and control. Thus the entity may maintain the precision required in the prediction of the future position of the vehicle, while reducing to the minimum the number of communications from the device regarding its position and displacement.

At the same time that the procedure tends to maximize the occupation of the vacant load capacity of the vehicles, reciprocally achieves transporting the loads of the highest possible number of transport requests, using the vehicles that have offered their vacant capacities. Thus, the execution of the process of the invention allows the entity to simultaneously manage a plurality of requests and a plurality of vehicle's offers.

When it happens that a same request could be transported by more than one vehicle, the entity will decide to which of them assigns the request, taking into account the degree of occupation of the vacant capacity of each one of them, and the value of the increase in the length of the route that would be caused to each of them by the detour necessary to transport the request. The entity gives priority to a vehicle in inverse function of those parameters, to achieve the highest possible efficiency by assigning the request to the vehicle less loaded and/or to the one that would assume a lesser detour by passing through the corresponding pick-up and delivery points.

Vehicles not only are forced to adapt their speed to the circumstances of the circulation but, when a vehicle finds a road cut (due to works, accidents, traffic, or other causes), often its driver takes the decision to go around the obstacle, by altering its planned route on the fly

With the described procedure of noticing the trajectory changes of vehicles, the control entity could be aware of what is the average speed and detect when there is a zone where vehicle traffic was interrupted:
The displacement averages indicated by the vehicle's devices when notifying to the entity its trajectory changes, represent valuable information for the entity to know on which places and at what speed circulate the vehicles; and this lets the entity know the current traffic conditions and predict what will be the speeds of other vehicles that will pass through those points in the same direction, achieving a greater success in its predictions about the future positions of other vehicles and the times they will spend on their courses.

Furthermore, the entity could use this information to build a dynamic model of the evolution of the frequency of passage of vehicles by a zone, and the average speed of the vehicles, according to an hourly, weekly or seasonal distribution of traffic. If the courses monitored by an entity represent a significant sample of the total number of vehicles in circulation, it prevents the need to fill the cities with expensive sensors dedicated for this purpose.

Once this model is built, the entity will compare to it the data received from the vehicle's devices to detect various types of traffic incidents, such as: a street or road cut when in a certain period of time doesn't pass any vehicle through a normally busy street; or a punctual congestion that slows down the speed of vehicles passing through there, below what would be the usual speed.

This real-time detection of traffic incidents allows the entity to mitigate the decrease of transport's efficiency that they cause, by reacting to them in two ways: avoiding to assign to the vehicles under its control any transport request that implies them to pass through a cut or congested street or road; and when it detects a point cut or congested on the planned route of a vehicle, for instance when it falls within the reach zone of the vehicle, the entity will introduce to its route one or several additional points in order that the device's navigator can divert the vehicle in time to avoid the congested zone.

Being this a procedure that manages the shared use of the vehicle in real time along its entire course, the benefit that each of the requests transported has obtained from the vehicle, will only be known once it reaches its delivery point, since this benefit will depend on the use of the vehicle really shared with other requests. For each request transported along the course, the entity keeps account of the value of a parameter that represents the benefit obtained from the vehicle:
The entity, who assigns requests to the vehicle, knows the location of the pick-up and delivery points, involving the entry or exit of load on it, and calculates the length of each of the legs between every two of these points, in which the vehicle transports a determined group of loads. It also knows the required load capacity that enters or leaves the vehicle at each of those points, so it can calculate which is the load carried by the vehicle in each leg, and can ponder or weight the length of the leg, dividing it by the transported load, which represents the benefit by unit of load. After managing the delivery of the load of a request, the entity knows in what legs of the route it has been transported and may add their weighted lengths. Then, multiplying this addition of weighted lengths of the legs by the requested load of this request, the entity obtains the value of the parameter that represents its benefit obtained from the vehicle.

The value of this parameter may be used to automatically perform an equitable sharing of the course's transport costs between the transported requests, just by multiplying it by an economic amount of the unit of distance.

### Brief description of the drawings.

**Figure 1** graphically describes the parameters used by the procedure to determine if a load transport request can or not be assigned to the course of a vehicle.
**Figure 2** represents a fragment of a vehicle's course (which starts being straight and then surrounds a roundabout to finally changing its definitive direction) and shows how the procedure detects the relevant changes in the trajectory of the vehicle, and how its future reach zones are predicted.
**Figure 3** represents an example of a full course of a vehicle, and how it is managed in real time by the procedure to transport several passengers along the route, taking profit of its vacant seats.

### Preferred way of carrying out the invention

A concrete implementation of the procedure is its application for the transport of passengers in the vacant seats of a private car, while it goes to the destination marked by its driver.

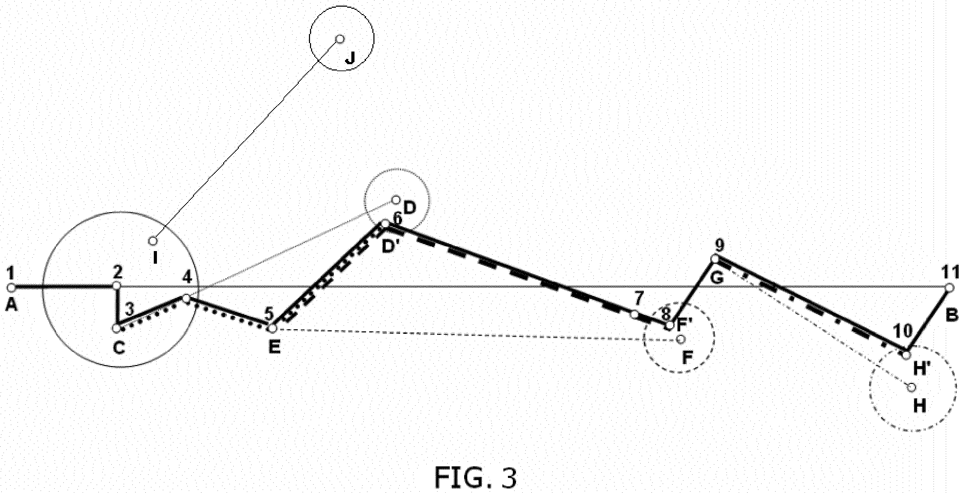

Figure 3 explains the procedure to detect passengers' paths compatible with the course of the vehicle, and to determine their new points of pick-up and delivery, to be added to the route of the vehicle in order to transport them.

This figure is also related to tables 1 and 2, shown herein below, since all of them refer to the offering and requests involved, the route of the vehicle and the events that happen in a same example course, in which happens all the circumstances that need to be considered to manage in real time the sharing of the vehicle. Each table and figure details different aspects:
Figure 3 shows graphically the situation over the ground of the points marked in the vehicle's route, and the points of origin and destination of the paths of five people. Four of them are carried by the same vehicle, thanks to the flexibility of its offering to admit slight deviations in its route, and to the flexibility of the passengers' transport requests to tolerate other points of delivery, which are near enough to their true destination point. The figure also serves to locate in space and in time the occurrence of the events, and to show how they are managed by the procedure.

Table 1 presents the offering and the requests of the users involved in the course: The first corresponds to the driver, who offers to vacant seats on the vehicle. The next three are requests of passengers who benefit from the vehicle's course. The latter is a request candidate to share the vehicle by a passenger, that turns out to be not suitable for this purpose. The table also shows the type of line that depicts in Figure 3 the path of each one of them, and the letters from (A) to (J) which identify the origin and destination points of their respective paths.

This example course shows how, despite the vehicle offers only 2 vacant seats, through the release of the passengers along its route, the procedure gets transported in the vehicle three of them, in addition to the driver, because, among other parameters, it takes account of the status of reservation and occupancy of the vacant seats of the vehicle.

**TABLE 1**

| **USER** | **DESIRED PATH** | **NUMBER OF SEATS offered/requested** | **TIPE OF LINE IN FIGURE** |
|---|---|---|---|
| **Driver** | **A-B** | **Offers 2** | **CONTINUOUS** |
| **Passenger 1** | **C - D** | **Requests 1** | **DOTTED** |
| **Passenger 2** | **E - F** | **Requests 1** | **DASHED** |
| **Passenger 3** | **G - H** | **Requests 1** | **DASH-DOT** |
| **Passenger 4** | **I - J** | **Requests 1** | **CONTINUOUS** |

Table 2 summarise the variables that the entity controls, and how they evolve along the route, when different events occur on along the course, which are significant to the management of the shared use of the vehicle, and with indication of the moment and place where they happen:
- The points defining the route that the vehicle plans to pass in each path.
- The counting of the status of the vacant seats of the vehicle that have been offered: free, reserved and occupied.
- The next point of the route, which is the target of the vehicle in each moment, and the objective to met in it.

Both in figure 3 and in this table, numbers from (1) to (11) represent the chronological order of the different significant events that happen along the course. They can be of the following types:
- Offering of the vacant seats of the vehicle.
- Assignment of passenger's requests to the vehicle.
- Pick up of some passenger by the vehicle.
- Delivery of some passenger.
- The arrival of the vehicle to its driver's destination.

**TABLE 2**

| **SECUENCE** | | **1** | **2** | **3** | **4** | **5** | **6** | **7** | **8** | **9** | **10** | **11** |
|---|---|---|---|---|---|---|---|---|---|---|---|---|
| **CURRENT LOCATION** | | **A** | | **C** | | **E** | **D'** | | **F'** | **G** | **H'** | **B** |
| **EVENT** | | Driver's Offering | P. 1 assign. | P. 1 pickup | P. 2 assign | P. 2 pickup | P. 1 deliv. | P. 3 (def.) assign | P. 2 deliv. | P. 3 pickup | P. 3 deliv. | course end |
| **Pending Points (Orig.-Dest.)** | D. | **- B** | **- B** | **- B** | **- B** | **- B** | **- B** | **- B** | **- B** | **- B** | **- B** | |
| | P.1 | | **C-D** | **- D** | **- D** | **- D** | | | | | | |
| | P.2 | | | | **E-F** | **- F** | **- F** | **- F** | | | | |
| | P.3 | | | | | | | **G-H** | **G-H** | **- H** | | - |
| **TARGET** (closest) | | **B** | **C** | **D'** | **E** | **D'** | **F'** | **F'** | **G** | **H'** | **B** | - |
| **NEXT OBJECTIVE** | | Driver destin. | P. 1 pickup | P. 1 deliv. | P. 2 pickup | P. 1 deliv. | P. 2 deliv. | P. 2 deliv. | P. 3 pickup | P. 3 deliv. | Driver destin. | |
| **Seats number:** Free/Reserv/Ocup | | 2/0/0 | 1/1/0 | 1/0/1 | 0/1/1 | 0/0/2 | 1/0/1 | 0/1/1 | 1/1/0 | 1/0/1 | 2/0/0 | 0/0/0 |

On Fig. 3, the thin lines join the origin and destination points desired for each user's path (driver and passengers), but the thick lines represent the path really made by each of them. The legs of the route where there is a single thick line are travelled by the driver alone. On those legs with more than one thick line, the driver goes along with some passenger aboard his vehicle.

There are also the points (D'), (F') and (H') representing the alternative destination points determined by the entity for the passengers. They are within the delivery tolerances established by each of their requests which are represented on the figure by circles of the same type of line as the passenger's path, around its destination point.

Figure3 is only a representation that outlines a route by means of straight lines, whose real layout corresponds to the disposal of streets or roads traversed by the vehicle's course.

The entity organises the course in the following way:
At the moment (1), the vehicle begins its displacement from point (A), destined to point (B) and offers 2 vacant seats to share. The entity begins to real time monitor its displacement along the path A-B, to predict its future position -at that moment, the position that will occupy at the moment (2)-, to determine a reach zone of the vehicle around this predicted point according to the value of the parameter of pick-up deviation, represented by the circle with centre in that point, and begins to identify candidate passenger's requests that are within this reach zone, like Passenger1 which is on point (C), and passenger4 on point (I).

The entity declares Passenger's4 request as non suitable to share the vehicle, because visiting its destination point (J), or any other point in its delivery zone -represented by the circle around (J)-, would mean for the vehicle an excessive delivery deviation. However, the entity assigns to the vehicle the request of Passenger1, which is located at the point (C) -also within the reach zone of the vehicle- and wants to go to the point (D), which is clearly on the way of the vehicle. At the moment (2), the control entity intercalates points (C) and (D') in the planned route of the vehicle, and the vehicle navigator directs it towards (C) to pick-up Passenger1. The entity accounts that in the vehicle 1 seat is reserved and another one remains vacant.

It must be emphasized that without the tolerance permitted by Pasenger1 about the delivery point, it wouldn't have been transported in this vehicle, because the point (D) is too far away from the ideal path of the vehicle, even considering its delivery deviation.

At the moment (3), the vehicle picks-up Passenger1 at point (C). The seat reserved to Passenger1 has been occupied and the vehicle still has another vacant seat. The point (C) is deleted from the route, and the vehicle's navigator directs it towards the alternative delivery point (D').

At the moment (4), the entity assigns to the vehicle a new request and reserves the last free seat available on it, so it will stop searching for path coincidences with other possible passengers. The entity adds to the route of the vehicle the pick-up and delivery points of Passenger2, who wants to displace from (E) to (F). Due to point (E) being closer than the point previously set as target (D'), the direction of the vehicle is reprogrammed to point (E) to pick-up Passenger2 first.

After picking-up Passenger2 at the moment (5), there are two passengers in the vehicle, whose deliveries are pending, on points (D') and (F'). The next point of the route, due to being the closest to the current position of the vehicle, is (D'), so the vehicle's navigator retakes this target, to deliver in it Passenger1.

Once point (D') is reached at moment (6), the vehicle delivers Passenger1. Again there is a free seat and the entity resumes its search for path coincidences. After deleting (D') from the route, the new target of the vehicle is (F') -the delivery point of Passenger2- who is the only one remaining in the vehicle.

At the moment (7), the entity assigns a new request to the vehicle. This time is Passenger3, who wishes to make the path from (G) to (H).

This time, the origin point of this new path (G) is at a greater distance than the planned target -the delivery point of passenger2-. That's why this point is added to the route following (F') and the pick-up of pasenger3 would be deferred. The vehicle has run out of free seats - having one occupied and the other reserved for Passenger3-, so searching of path coincidences for the vehicle is stopped again.

Once point (F') is reached at moment (8), Passenger2 is delivered at its alternative destination point, point (F') is deleted from the route, one seat is accounted as free and another one as reserved, and the vehicle's navigator is programmed to go to point (G) to pick up Passenger3. Once again the entity searches for passengers whose paths coincide with the planned route of the vehicle.

At the moment (9), Passenger3 is picked up on point (G) and vehicle's target is set to his alternative destination point (H'). One free seat plus one occupied are booked.

Once point (H') is reached at moment (10), the driver delivers Passenger3 and, being no more passengers in the vehicle, and having no more passengers to pick up -due to not more assignments having been established-, all intermediate points of the route have been deleted, and point (B) is set as the vehicle's target. That's the driver's destination, and therefore the final point of the route.

At the moment (11), when the entity checks that there are no more path coincidences with passengers before reaching the drivers point of destination (B), the procedure ends.

Below some terms are precisely defined:
"Course" means the act that a vehicle follows a certain route at a particular time. "Route" means a succession of points traversed by the vehicle until it gets to the destination point of its current course. The "initial route" began in the position where the vehicle made its offer; while the "planned route" begins in its current position, and may include intermediate points additional to those of the initial route. Both the device of the vehicle and the control entity maintain updated a definition of the planned route, thanks to communicate only some unique an characteristic points of the route, such as the aforementioned and other intermediate points interspersed among them for the pick-up and delivery of load transport requests. To determine the "distance to the route from a point" of origin or destination of a request, or from an alternative point of delivery for a request, it will be calculated the distance from this point to the nearest point the vehicle has to pass to take its planned course. A request indicates a "path" between an origin point and a destination point. Path also means that part of the route of the vehicle that transports the request's load between its pick-up point and delivery point. "Leg" stands for each part of the route between two consecutive points of pick-up and/or delivery, in which the vehicle is shared by the loads of a same group of requests, or by a single one.

To simplify the numbering of the elements and features of the procedure, usually the singular in used to refer to a vehicle to which the transport of a request is assigned; in the understanding that the invention actually contemplates the simultaneous management of the shared use of a plurality of vehicles by a plurality of requests.

### Ways in which the invention is industrially applicable.

There are several aspects in which the invention can be applied industrially:
1. Manufacturers of certain portable devices like smart mobile phones, tablets, personal computers, laptops or GPS road navigators like the ones used in cars, or third-party software developers for them, may incorporate in these devices an interface application allowing their users to benefit from the shared use of vehicles in accordance with the procedure described
2. The companies that presently provide route calculations services (for instance on Internet sites or through car navigators) could be the most appropriate ones to create the control entities described by the invention, bringing a new service of management of the vacant load capacities of vehicles through its shared use and traffic management.
3. The companies currently performing transport or vehicle fleet management services may apply some of the procedures revealed in this invention to improve their efficiency in the organization of transport and/or the performance of the communications with the devices on the managed vehicles.

In the present invention it is described and claimed the execution mode which is considered more favourable among several possible, i.e.: the one in which no direct telecommunications are required between the transportation offers and requests; and in which the fewest number of messages exchanged between the control entity and vehicle's devices occurs.

However, once the invention is disclosed with the level of detail provided, a person skilled in the art could design an equivalent system, with modified communication protocols, or equivalent functions to monitor and control the vehicle's courses.

The features of the invention disclosed in the description and any of the claims may be essential, both individually and in any combination of them, for the implementation of the invention in their different ways of realization.

The terms and expressions which have been employed in the foregoing specification are used therein as terms of description and not of limitation, and there is no intention, in the use of such terms and expressions, of excluding equivalents of the features shown and described or portions thereof, it being recognized that the scope of the invention is defined and limited only by the claims which follow.

The particular systems and procedures described herein are intended to illustrate the functionality and versatility of the invention, but should not be construed to be limited to those particular embodiments. Systems and methods in accordance with the invention are useful in a wide variety of circumstances and applications. It is evident that those skilled in the art may now make numerous uses and modifications of the specific embodiments described, without departing from the inventive concepts. It is also evident that the steps recited may, in some instances, be performed in a different order or by a different actor; or equivalent structures and processes may be substituted for the structures and processes described. Since certain changes may be made in the above systems and procedures without departing from the scope of the invention, it is intended that all subject matter contained in the above description or shown in the accompanying drawings be interpreted as illustrative and not in a limiting sense. Consequently, the invention is to be construed as embracing each and every novel feature and novel combination of features present in or inherently possessed by the systems and procedures described in the claims below and by their equivalents.

## Claims

1. Procedure for an entity to monitor and control a course of a vehicle, that has a device in communication with the entity, an initial route towards a vehicle destination point and an initial vacant load transport capacity, to utilize said vacant capacity by at least one assignment to said course of a load transport request between a request origin point and a request destination point, **characterized in that**
• a) first, the vehicle's device indicates to the entity the current position of the vehicle and the value of a parameter of deviation allowed from the initial route of the vehicle;
• b) then, the entity establishes a reach zone of the vehicle, as a function of its position and the value of a parameter of pick-up deviation proportional to the deviation allowed from the route of the vehicle;
• c) later on, when a request origin point falls within the reach zone of the vehicle, the entity declares said request as candidate to be transported in the vehicle if a required load capacity of the request is less than a current vacant load capacity of the vehicle;
• d) then, the entity declares said candidate request as suitable to be transported in the vehicle if the distance from the request destination point to a planned route of the vehicle is less than the value of a parameter of delivery deviation proportional to the deviation allowed from the route of the vehicle;
• e) then, the entity assigns to the course of the vehicle the transport of the suitable request, adding to the planned route of the vehicle said request origin point as a pick-up point of its load and said request destination point as a delivery point of said load;
• f) afterwards, when the device sends to the entity a message of notification of the arrival of the vehicle to some of the planned route points, said point is deleted from the route;
• g) then, the entity recalculates the load capacity that remains vacant in the vehicle, taking into account the initial capacity, the notifications of arrival to pick-up and delivery points of its route, and the required load capacity of each transport request assigned; and
• h) finally, steps b to g are reiterated until the vehicle reaches its destination point, assigning the entity along the course a plurality of transport requests, thanks to which optimizes the use of its vacant transport capacity.

2. Procedure according to claim 1, **characterized in that**
• a) first, the transport request includes the value of a parameter of tolerance of delivery that defines a delivery zone around its destination point;
• b) then, the entity looks for an alternative delivery point to said destination point, such that the distance from said alternative delivery point to the planned route of the vehicle is less than the value of the parameter of delivery deviation, and said alternative delivery point falls within said delivery zone;
• c) then, the entity also declares as suitable to be transported in the vehicle every candidate request with tolerance of delivery for which at least one alternative delivery point has been found; and
• d) finally, the point included on the planned route of the vehicle as delivery point of the load of said suitable request with tolerance of delivery, is one of said alternative delivery points.

3. Procedure according to claims 1 or 2, **characterized in that**
• a) first, the entity calculates the values of the parameters of pick-up deviation and delivery deviation as a function of the value of the parameter of deviation allowed from the route, that is indicated as a ratio between the increment of the length of the route of the vehicle allowed for requests transportation, and the length of the initial route of the vehicle; and
• b) then, the entity doesn't declare a request as suitable if it calculates that, as a result of adding to the route its pick-up and delivery points, said length increment would be exceeded.

4. Procedure according to claims 1 or 2, **characterized in that**
• a) first, the entity calculates the values of the parameters of pick-up deviation and delivery deviation as a function of a speed of displacement of the vehicle, the length of its planned route and the value of the parameter of deviation allowed from the route, that is indicated as a limit time of arrival of the vehicle to its destination point; and
• b) then, the entity doesn't declare a request as suitable if it calculates that, as a result of adding to the route its pick-up and delivery points, the vehicle would reach its destination after said time.

5. Procedure according to any of the preceding claims, **characterized in that** the entity adjusts the value of the parameter of pick-up deviation as a function of a degree of occupancy of the initial vacant load transport capacity that the vehicle has.

6. Procedure according to any of the preceding claims, **characterized in that** the entity adjusts the value of the parameter of delivery deviation as a function of a degree of occupancy of the initial vacant load transport capacity that the vehicle has.

7. Procedure according to any of the preceding claims, **characterized in that** the entity adjusts the value of the parameter of delivery deviation as a function of the distance between request's origin and destination points.

8. Procedure according to any of the preceding claims, **characterized in that** the entity adjusts the value of the parameter of delivery deviation as a function of the required load capacity of the request.

9. Procedure according to any of the claims 1 to 8, **characterized in that** the vacant load transport capacity of the vehicle and the required load capacity of the request are indicated as a number of seats for passenger transportation.

10. Procedure according to any of the claims 1 to 8, **characterized in that** the vacant load transport capacity of the vehicle and the required load capacity of the request are indicated as a weight for goods transportation.

11. Procedure according to any of the claims 1 to 8, **characterized in that** the vacant load transport capacity of the vehicle and the required load capacity of the request are indicated as a volume for goods transportation.

12. Procedure according to any of the claims 1 to 8, **characterized in that** the vacant load transport capacity of the vehicle and the required load capacity of the request are indicated as any combination of the number of seats for passenger transportation, the weight and the volume for goods transportation.

13. Procedure according to any of the preceding claims, **characterized in that**
• a) first, the device periodically calculates an average of the recent displacement of the vehicle during the time indicated by the value of a parameter of averaging time;
• b) then, the device compares the last displacement average calculated, with the last displacement average sent to the entity and, when the difference between both averages is more than the value of a parameter of change of trajectory notice threshold, sends to the entity a message of change of vehicle's trajectory notice, communicating the last displacement average calculated; and
• c) finally, during the time elapsed between two messages from the device containing information about its displacement, the entity estimates a calculated current position of the vehicle as a function of said information and the time elapsed since the last message.

14. Procedure according to claim 13, **characterized in that** the entity indicates to the device the value of the parameter of averaging time of the recent displacement of the vehicle.

15. Procedure according to claims 13 or 14, **characterized in that** the entity indicates to the device the value of the parameter of change of trajectory notice threshold.

16. Procedure according to any of the claims 13 to 15, **characterized in that** the device performs the calculation of the average of the recent displacement of the vehicle by storing the last positions of the vehicle in a circular register whose storage capacity of positions is proportional to the value of the parameter of averaging time.

17. Procedure according to any of the preceding claims, **characterized in that**
• a) first, the entity predicts a future position where the vehicle will be when a determined time of anticipation elapses, as a function of the last information received about its displacement, and the time elapsed since said communication, plus said time of anticipation; and
• b) then, the entity establishes the reach zone of the vehicle, as a function of said future position.

18. Procedure according to any of the preceding claims, **characterized in that** when the entity declares that the same transport request is suitable to be carried by more than one of the vehicles whose courses monitors and controls, the entity assigns said request to one of said vehicles as a function of two factors: the degree of occupancy of the vacant load transport capacity that has each of said vehicles, and the route length increment involved for each of them to transport said request.

19. Procedure according to any of the claims 4 to 18, **characterized in that** the entity uses the speed indicated by the average of the displacement of a vehicle, which has been communicated by its device in certain point of its course, to predict the speed that will have other vehicles whose planned routes pass through that point.

20. Procedure according to any of the claims 4 to 19, **characterized in that** the entity
• a) first, compares the speed of the average of the displacement communicated by the device of a vehicle in certain point, with the speed that would be usual at that point in the current date and time according to a statistical distribution, to detect the existence of a traffic congestion at that point;
• b) in case there is a congestion point, it adds at least one additional point to the planned routes of the vehicles that pass through said point, so that they detour and avoid passing through that point; and
• c) finally, it doesn't assign to a vehicle a transport request requiring it to pass through said congestion point.

21. Procedure according to any of the claims 4 to 20, **characterized in that** the entity
• a) first, compares a number of vehicles, whose courses monitors through the change of trajectory notices of their devices, passing in certain period by in certain point, with the number of vehicles monitored that would be usual at that point in the current date and time according to a statistical distribution, to detect the existence of a traffic interruption at that point;
• b) in case there is a point with traffic interruption, it adds at least one additional point to the planned routes of the vehicles that pass through said point, so that they detour and avoid passing through that point; and
• c) finally, it doesn't assign to a vehicle a transport request requiring it to pass through said point with traffic interruption.

22. Procedure according to any of the preceding claims, **characterized in that**
• a) first, the entity takes into account the pick-up and delivery points of requests along the route of the vehicle to calculate the length of each one of the legs went through by the vehicle, in each one of them it carries the same group of requests;
• b) then, it weights said length by dividing it by de addition of the load capacities required for the requests of said group; and
• c) finally, it calculates the value of a parameter that accounts for the benefit obtained from the vehicle for each request transported during the course, through the product of its respective load capacity required, times the addition of the weighted lengths of each of the legs in which it has been transported.
